# FASCICULE DE BREVET EUROPEEN

(11) **EP 2 197 181 B1**
(45) Date de publication et mention de la délivrance du brevet: **14.09.2011**
(21) Numéro de dépôt: 08291169.4
(22) Date de dépôt: 11.12.2008
(51) Int. Cl.: H04M 1/02, H04M 1/725, H04M 19/04

(54) **Appareil de communication portable avec moyens d'avertissement sonore et/ou sensorielle**
Tragbares Kommunikationsgerät mit akustischen und/oder sensorischen Warnungsmitteln
Portable communication apparatus with audible and/or sensory notification means

(43) Date de publication de la demande: 16.06.2010
(73) Titulaire: CELSIUS X VI II, 75011 Paris (FR)
(72) Inventeur: Romaric, André, 75009 Paris (FR); Pruvot, Thomas, 75019 Paris (FR)
(74) Mandataire: Micheli & Cie SA

(56) Documents cités:
- WO-A-2007/065483
- DE-U1- 20 021 115
- NL-C2- 1 024 042
- US-A1- 2002 127 998
- US-A1- 2004 214 594

## Description

La présente invention concerne un appareil de communication électronique portable, notamment un téléphone portable.

De manière générale, on distingue trois types de téléphones portables : ceux constitués de deux parties articulées autour d'un axe de rotation et se rabattant l'une sur l'autre, ceux dont les deux parties coulissent l'une sur l'autre dans deux plans parallèles et finalement ceux constitués d'une partie seulement.

Ces différents types d'appareil sont le plus souvent équipés d'un transducteur électroacoustique et/ou d'un système électromécanique générant des vibrations, l'utilisateur étant alors averti d'une information relative au téléphone par une alarme sonore ou par l'entrée en vibration de l'appareil.

Dans le cas où l'utilisateur ne perçoit pas l'alarme sonore ou vibrante ou a désactivé celle-ci, il doit consulter l'écran de son téléphone pour savoir si de nouvelles informations sont disponibles, comme par exemple un message vocal ou SMS, un appel manqué, un rappel concernant un évènement programmé par l'utilisateur ou encore un signal de batterie faible.

Le but de la présente invention est de permettre à l'utilisateur de savoir si de nouvelles informations relatives au téléphone portable sont disponibles sans avoir besoin de consulter l'écran ni de sortir le téléphone d'un étui ou d'une poche ni de l'ouvrir dans le cas d'un téléphone à clapet ou coulissant.

La présente invention a pour objet un appareil de communication portable, notamment un téléphone portable, caractérisé par le fait qu'il comporte un mécanisme comprenant une cavité, un élément mobile apte à se déplacer librement au sein de la cavité et des moyens d'immobilisation permettant de bloquer et de libérer l'élément mobile, et des moyens de commande du mécanisme ; et par le fait que les moyens de commande sont agencés pour que les moyens d'immobilisation libèrent l'élément mobile dans la cavité lorsque de nouvelles informations relatives à l'appareil de communication portable sont disponibles, l'effet sonore et/ou sensoriel produit par ledit élément frappant les parois de la cavité avertissant l'utilisateur de la présence de ces nouvelles informations lorsque celui-ci secoue l'appareil de communication portable.

Des modes de réalisation particuliers de l'invention sont définis dans les revendications dépendantes annexées 2 à 12.

La présente invention permet à l'utilisateur de connaître l'état de l'appareil de communication portable de manière très intuitive, simplement en le secouant. Typiquement, deux cas sont alors possibles : soit l'élément mobile est libéré et l'appareil produit un son au moment de la secousse, soit en l'absence de nouvelles informations, l'élément mobile est bloqué dans la cavité par les moyens d'immobilisation et l'appareil secoué ne produit aucun son.

L'utilisateur connaît donc immédiatement l'état de son appareil sans avoir à consulter l'écran, ni à le sortir d'un étui ou d'une poche, ni encore à ouvrir l'appareil si celui-ci est composé de deux parties coulissant ou se rabattant l'une sur l'autre. L'avantage est encore plus marqué pour ce dernier type d'appareil si l'appareil ne possède pas d'écran secondaire sur sa partie extérieure, la présente invention évitant ainsi à l'utilisateur une ouverture intempestive dudit appareil.

La présente invention peut également être une aide non négligeable pour les personnes malvoyantes, l'élément mobile libéré au sein de la cavité leur indiquant par exemple qu'un message vocal reste à écouter.

Les dessins annexés illustrent schématiquement et à titre d'exemple différents modes de réalisation du mécanisme utilisé dans l'appareil de communication portable selon l'invention.
La figure 1 est une vue en coupe plane selon la ligne I-I de la figure 2, d'un mécanisme utilisé dans un premier mode de réalisation de l'invention, en position fermée.
La figure 2 est une vue de profil de ce mécanisme en position fermée.
La figure 3 est une vue en coupe plane selon la ligne III-III de la figure 4 de ce mécanisme en position ouverte.
La figure 4 est une vue de profil de ce mécanisme en position ouverte.
La figure 5 illustre schématiquement un exemple de forme géométrique appropriée de mâchoires faisant partie dudit mécanisme.
La figure 6 représente schématiquement une partie électronique de commande dudit mécanisme.
La figure 7 est une vue en coupe de profil d'un mécanisme utilisé dans une variante du premier mode de réalisation, en position ouverte.
La figure 8 est une vue plane de face d'un mécanisme utilisé dans un deuxième mode de réalisation de l'invention.
La figure 9 est une vue en coupe selon la ligne IX-IX de la figure 8, du mécanisme utilisé dans le deuxième mode de réalisation.
La figure 10 est une vue en coupe selon la ligne X-X de la figure 8, du mécanisme utilisé dans le deuxième mode de réalisation.
La figure 11 est une vue plane de face d'un téléphone portable monobloc contenant un mécanisme tel qu'illustré à la figure 7.
La figure 12 est une vue de profil du téléphone portable illustré à la figure 11.

Dans le cadre de la présente invention, on appelle téléphone portable tout objet comportant une fonction de téléphonie mobile. Il peut s'agir d'un téléphone portable proprement dit ou d'un assistant digital personnel (PDA), par exemple.

Dans ce qui suit plusieurs modes de réalisation d'un mécanisme utilisé dans un téléphone portable selon l'invention sont décrits à titre d'exemples non limitatifs.

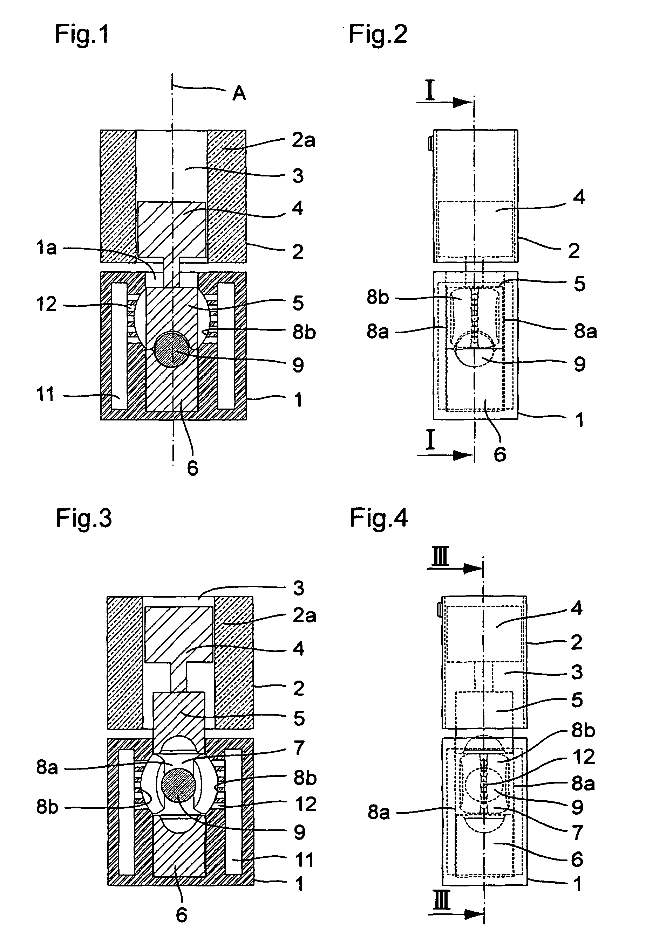

Un premier mode de réalisation d'un mécanisme est illustré dans les figures 1 à 5. Le mécanisme comprend un corps 1 fixe par rapport au boîtier du téléphone et un moteur linéaire 2, par exemple de type électromagnétique. La partie fixe ou stator 2a du moteur linéaire 2 est alignée avec le corps 1 suivant l'axe longitudinal A du mécanisme et est, elle aussi, fixe par rapport au boîtier du téléphone. La partie fixe 2a comporte un logement central longitudinal 3 dans lequel se déplace la partie mobile 4 du moteur 2 suivant l'axe A.

L'extrémité de la partie mobile 4 du moteur 2 constitue une mâchoire mobile 5. Cette mâchoire mobile 5 dépasse longitudinalement de la partie fixe 2a et est guidée dans un logement central longitudinal 1a du corps 1 qui communique avec le logement 3. Une mâchoire fixe 6 est placée dans le fond du logement 1 a dans le corps 1. Ces deux mâchoires sont destinées à coopérer. Les figures 1 et 2 illustrent les mâchoires 5 et 6 en position fermée (mâchoires proches l'une de l'autre) tandis que les figures 3 et 4 illustrent les mâchoires 5 et 6 en position ouverte (mâchoires éloignées l'une de l'autre).

L'espace entre les mâchoires 5 et 6 en position ouverte et les parois du logement 1a constitue une cavité 7. Une bille 9 est placée à l'intérieur de la cavité 7 et s'y déplace librement lorsque les mâchoires 5 et 6 sont en position ouverte. De préférence, la bille 9 est métallique, de même que les parois de la cavité 7. Dans l'exemple illustré, la cavité 7 comporte deux parois planes opposées 8a et deux parois concaves opposées 8b. La cavité 7 pourrait toutefois avoir une autre forme.

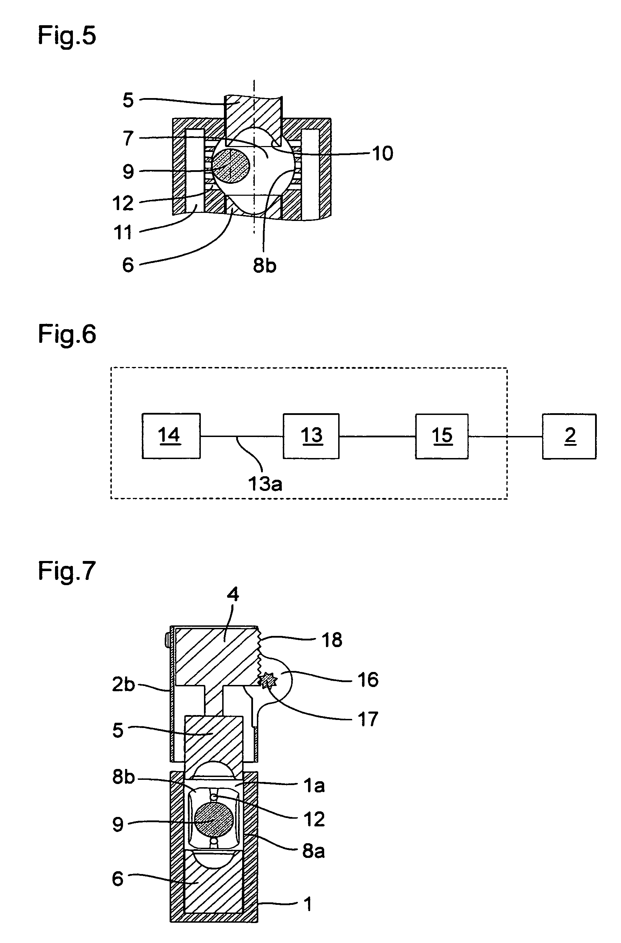

Les mâchoires 5 et 6 sont agencées de manière à pouvoir tour à tour bloquer et libérer la bille 9. En particulier, la géométrie des mâchoires 5 et 6, de la cavité 7 et de la bille 9 est telle qu'à tout moment, quelle que soit la position de la bille 9 dans la cavité 7 ou l'orientation du téléphone, la mâchoire mobile 5 entraînée en translation dans le logement 1a par le moteur 2 en direction de la mâchoire fixe 6 repositionne la bille 9 au centre des deux mâchoires 5 et 6 et la maintienne ainsi serrée et immobile entre lesdites mâchoires. Pour ce faire, la surface de contact des mâchoires 5 et 6 a, de préférence, une forme de calotte sphérique épousant la forme de la bille 9. De plus, comme le montre schématiquement la figure 5, la section de l'ouverture 10 de chaque mâchoire 5 et 6 qui reçoit la bille 9 est suffisamment grande pour permettre aux mâchoires 5 et 6 de recentrer la bille 9 entre elles par la simple translation de la mâchoire mobile 5, même lorsque la bille 9 se trouve en contact avec une paroi de la cavité 7.

De préférence, le corps 1 comporte encore des cavités longitudinales latérales 11 reliées à la cavité 7 par une série de trous 12. Ces cavités 11 servent de caisses de résonance au mécanisme.

La figure 6 illustre la chaîne de commande du moteur 2. Ce dernier est commandé typiquement par un microcontrôleur dédié 13 lui-même connecté au processeur principal 14 du téléphone portable par une liaison série 13a telle qu'une liaison 12C, UART ou SPI. Un circuit d'amplification 15 est interconnecté entre le microcontrôleur 13 et le moteur 2 pour amplifier les signaux de commande à appliquer au moteur 2. Il est clair toutefois que le moteur 2 pourrait en variante être commandé directement par le processeur principal 14 plutôt que par un microcontrôleur dédié 13.

Initialement, les mâchoires 5 et 6 sont en position fermée et la bille 9 est immobilisée entre elles. Lorsque de nouvelles informations relatives au téléphone portable sont disponibles, le microcontrôleur 13 commande au moteur 2 l'ouverture de la mâchoire mobile 5. La bille 9 est ainsi libérée au sein de la cavité 7 et lorsque l'utilisateur secoue le téléphone portable, il entend le son émis par la bille métallique 9 frappant les parois métalliques de la cavité 7 amplifié par les caisses de résonance 11 et grâce à l'inertie et à la masse de la bille 9, sent celle-ci se déplacer dans la cavité 7 et sait alors que de nouvelles informations comme un message vocal ou SMS non lu, un signal d'appel manqué, un rappel d'évènement programmé par l'utilisateur ou un signal de batterie faible sont accessibles.

Une fois que l'utilisateur a pris connaissance de toutes les informations relatives au téléphone portable disponibles, le microcontrôleur 13 commande au moteur 2 la fermeture de la mâchoire mobile 5 qui, de part sa géométrie, ramène la bille 9 au centre des deux mâchoires 5 et 6 et la maintient immobile. Le téléphone portable secoué par l'utilisateur ne produit alors plus aucun son.

Dans une variante de ce mode de réalisation illustrée à la figure 7, le moteur linéaire 2 est remplacé par un moteur rotatif électrique 16 doté d'un pignon d'entraînement 17. Comme dans la variante précédente, le moteur électrique 16 peut être commandé par un microcontrôleur 13 connecté au processeur principal 14.

Dans cette variante, la partie mobile 4 avec sa mâchoire 5 subsiste, mais comporte une crémaillère 18 sur une de ses faces qui engrène avec le pignon 17 pour déplacer la partie mobile 4 et donc la mâchoire 5 en translation dans le logement 1a du corps 1. Dans son déplacement, la partie mobile 4 est guidée dans un corps fixe 2b de forme similaire à la partie fixe 2a de la variante précédente. Les autres composants et le fonctionnement de cette variante sont similaires en tout point à la variante précédemment décrite.

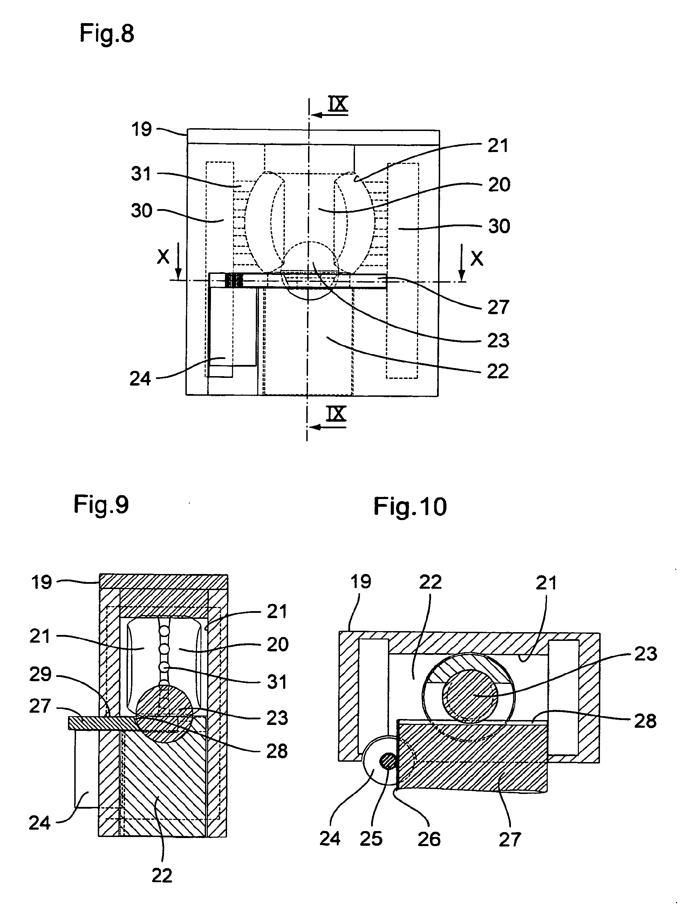

Un second mode de réalisation du mécanisme utilisé dans un téléphone portable selon l'invention va être décrit maintenant en relation avec les figures 8 à 10.

Dans ce mode de réalisation, le mécanisme comprend un corps 19 comportant une cavité intérieure 20 dont une partie des parois 21 est de préférence métallique et un aimant permanent 22 dont l'extrémité forme une des parois de la cavité 20. Afin d'isoler le mécanisme du reste du téléphone, le corps 19 est réalisé en un matériau de blindage magnétique tel que le mumétal.

Une bille 23 en matériau aimantable, par exemple ferreux, est sise dans la cavité 20 et est apte à se déplacer librement dans ladite cavité.

Naturellement, la bille 23 est maintenue immobile contre l'aimant permanent 22 par l'attraction magnétique exercée par celui-ci. Pour augmenter la surface de contact et ainsi permettre un meilleur maintien de la bille 23, l'extrémité de l'aimant 22 en contact avec la bille 23 a la forme d'une calotte sphérique épousant la forme de ladite bille.

Un moteur électrique 24 doté d'un pignon d'entraînement 25 est placé sur le corps 19. Le moteur 24 entraîne en translation via une crémaillère 26 une pièce mobile 27.

La pièce 27 est de forme plate et rectangulaire, comporte la crémaillère 26 sur l'un de ses flancs et possède un flanc biseauté 28. La pièce 27 est de plus réalisée en un matériau de blindage magnétique tel que le mumétal.

Entraînée par le moteur 24 via le pignon 25 et la crémaillère 26, la pièce 27 se déplace en translation dans une fente 29 prévue à cet effet dans le corps 19 et perpendiculairement à l'axe IX-IX dudit corps.

Le moteur électrique 24, le pignon 25 et la pièce mobile 27 sont agencés de sorte que, depuis sa position initiale partiellement à l'extérieur du corps 19, la pièce 27 puisse glisser dans la fente 29 du corps 19, le long de l'extrémité de l'aimant permanent 22 en contact avec la bille 23, décollant ainsi la bille 23 de la surface dudit aimant 22 par son flanc biseauté 28. Une fois que la pièce 27 recouvre entièrement l'aimant permanent 22 et est ainsi interposée entre l'aimant 22 et la bille 23, de part sa composition ladite pièce 27 isole magnétiquement la bille 23 de l'aimant 22, laquelle bille est alors libre de se déplacer à l'intérieur de la cavité 20.

Lorsque la pièce 27 entraînée par le moteur 24 revient dans sa position initiale, découvrant à nouveau l'aimant 22, la bille 23 est à nouveau soumise au champ magnétique de l'aimant 22 qui l'attire et la maintient immobile.

Comme le moteur 2 du premier mode de réalisation, le moteur 24 est commandé typiquement par un microcontrôleur dédié 13 lui-même connecté au processeur principal 14 du téléphone portable. Il est clair toutefois que le moteur 24 pourrait également être commandé directement par le processeur principal 14 plutôt que par un microcontrôleur dédié 13.

De préférence, le corps 19 comporte encore des cavités longitudinales latérales 30 de part et d'autre de la cavité 20 reliées à la cavité 20 par une série de trous 31. Ces cavités 30 servent de caisses de résonance au mécanisme.

Initialement, la pièce 27 se trouve dans la fente 29 en partie à l'intérieur et en partie à l'extérieur du corps 19, la surface de l'aimant 22 est découverte et la bille 23 est immobilisée contre l'aimant 22 (figures 9,10). Lorsque de nouvelles informations relatives au téléphone portable sont disponibles, le microcontrôleur 13 commande au moteur 24 la mise en mouvement de la pièce 27 qui entraînée en translation dans la fente 29 décolle la bille 23 de l'aimant permanent 22 et recouvre la surface de ce dernier. La bille 23 est ainsi libérée au sein de la cavité 20 et lorsque l'utilisateur secoue le téléphone portable, il entend le son émis par la bille 23 frappant les parois métalliques 21 de la cavité 20 et amplifié par les caisses de résonance 30 et grâce à l'inertie et à la masse de la bille 23, sent celle-ci se déplacer dans la cavité 20 et sait alors que de nouvelles informations comme un message vocal ou SMS non lu, un signal d'appel manqué, un rappel d'évènement programmé par l'utilisateur ou un signal de batterie faible sont accessibles.

Une fois que l'utilisateur a pris connaissance de toutes les informations relatives au téléphone portable disponibles, le microcontrôleur 13 commande au moteur 24 le retrait de la pièce 27 qui découvre l'aimant permanent 22. La bille 23, à nouveau soumise au champ magnétique de l'aimant 22, est maintenue immobile par ce dernier. Le téléphone portable secoué par l'utilisateur ne produit alors plus aucun son.

Une variante de ce mode de réalisation non illustrée dans les figures consiste à ajouter au moins une bille en matériau aimantable supplémentaire dans la cavité 20, le son créé lors de la secousse du téléphone portable étant alors différent du son créé par une seule bille 23.

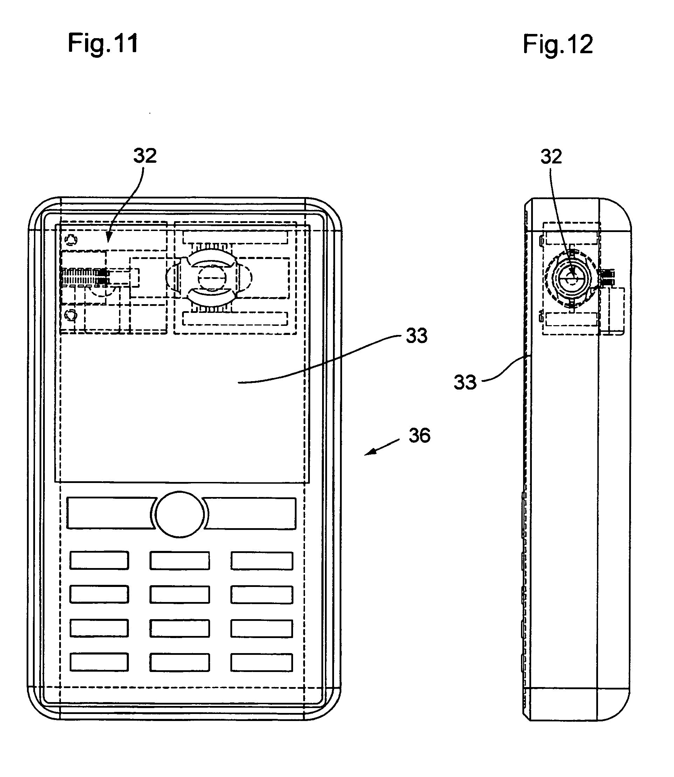

Typiquement, comme illustré dans les figures 11 et 12 dans le cas d'un téléphone portable 36 monobloc, le mécanisme selon le premier ou le second mode de réalisation 32 est placé dans la partie supérieure du téléphone derrière l'écran 33. Cette forme d'implantation n'est toutefois pas limitative. Il est évident pour l'homme du métier que le mécanisme peut être positionné dans une autre quelconque partie du téléphone 36 et dans une autre orientation, les seules contraintes étant de préserver le fonctionnement du téléphone portable et du mécanisme.

De même, bien que la figure 11 présente un téléphone portable monobloc, il est évident que le mécanisme 32 peut équiper un téléphone à clapet ou coulissant constitué de deux parties, ledit mécanisme étant alors positionné indifféremment dans l'une ou l'autre partie.

La présente demande couvre également un téléphone portable équipé de plusieurs mécanismes tels que décrits ci-dessus, lesdits mécanismes comprenant des billes respectives de taille et de masse différentes produisant des effets sonores et/ou sensoriels différents lorsque l'utilisateur secoue le téléphone portable et que les billes viennent frapper les parois métalliques de leur cavité respective. Chacun de ces mécanismes peut par exemple servir d'avertisseur dédié à un type spécifique d'information comme un message reçu ou un signal de batterie faible. Au son ou à la sensation produite lorsqu'il agite le téléphone, l'utilisateur peut alors reconnaître quel type d'information est disponible. L'ensemble des mécanismes peut être commandé par un microcontrôleur dont le nombre de sorties correspond au nombre de mécanismes. On peut également dédier à chaque mécanisme un microcontrôleur propre.

La présente invention a été décrite ci-dessus à titre d'exemple uniquement. Il va de soi que des modifications pourraient être faites sans sortir du cadre de l'invention revendiquée.

Par exemple, la bille pourrait être remplacée par un élément mobile d'une autre forme, notamment dans le second mode de réalisation.

Egalement, la présente invention peut s'appliquer à d'autres appareils de communication portables qu'un téléphone, par exemple un simple appareil de messagerie ne comportant pas de fonction de communication vocale (téléphonie).

## Revendications

1. Appareil de communication portable **caractérisé par le fait qu'**il comporte un mécanisme comprenant une cavité (7), un élément mobile (9) apte à se déplacer librement au sein de la cavité et des moyens d'immobilisation (2,5,6) permettant de bloquer et de libérer l'élément mobile, et des moyens (13) de commande du mécanisme; et **par le fait que** les moyens de commande (13) sont agencés pour que les moyens d'immobilisation (5,6) libèrent l'élément mobile (9) dans la cavité (7) lorsque de nouvelles informations relatives à l'appareil de communication portable sont disponibles, l'effet sonore et/ou sensoriel produit par ledit élément mobile (9) frappant les parois de la cavité (7) avertissant l'utilisateur de la présence de ces nouvelles informations lorsque celui-ci secoue l'appareil de communication portable.

2. Appareil de communication portable selon la revendication 1, **caractérisé par le fait que** les nouvelles informations relatives à l'appareil de communication portable comprennent un nouveau message reçu et/ou une indication de charge faible de la batterie et/ou une indication d'appel manqué et/ou un rappel d'un évènement programmé par l'utilisateur.

3. Appareil de communication portable selon la revendication 1 ou 2, **caractérisé par le fait que** les moyens de commande (13) sont agencés afin que lorsque l'utilisateur a pris connaissance des informations nouvelles disponibles relatives à l'appareil de communication portable, les moyens d'immobilisation (5,6) bloquent l'élément mobile (9) dans la cavité (7), l'empêchant de frapper les parois de la cavité (7) lorsque l'utilisateur secoue l'appareil de communication.

4. Appareil de communication portable selon l'une quelconque des revendications 1 à 3, **caractérisé par le fait que** les moyens d'immobilisation (2,5,6) comprennent un moteur (2) et des moyens de blocage mécanique (5,6) pouvant être actionnés par le moteur (2) pour libérer ou bloquer l'élément mobile (9).

5. Appareil de communication portable selon la revendication 4, **caractérisé par le fait que** les moyens de blocage mécanique comprennent des mâchoires (5,6).

6. Appareil de communication portable selon la revendication 5, **caractérisé par le fait que** lesdites mâchoires comprennent une mâchoire fixe (6) et une mâchoire mobile (5) qui peut être actionnée par le moteur (2).

7. Appareil de communication portable selon l'une quelconque des revendications 1 à 3, **caractérisé par le fait que** l'élément mobile (23) est en matériau aimantable et **par le fait que** les moyens d'immobilisation comprennent un moteur (24), un aimant permanent (22) et des moyens (27) pouvant être actionnés par le moteur (24) pour isoler ou non l'élément mobile (23) de l'attraction magnétique engendrée par l'aimant permanent (22).

8. Appareil de communication portable selon l'une quelconque des revendications 1 à 7, **caractérisé par le fait que** l'élément mobile (9) est en métal.

9. Appareil de communication portable selon l'une quelconque des revendications 1 à 8, **caractérisé par le fait que** l'élément mobile (9) est une bille.

10. Appareil de communication portable selon l'une quelconque des revendications 1 à 9, **caractérisé par le fait qu'**une partie au moins des parois de la cavité (7) est en métal.

11. Appareil de communication portable selon l'une quelconque des revendications 1 à 10, **caractérisé par le fait que** la cavité (7) communique avec au moins une autre cavité (11) servant de caisse de résonance.

12. Appareil de communication portable selon l'une quelconque des revendications 1 à 11, **caractérisé par le fait qu'**il consiste en un téléphone portable.

## Claims

1. Mobile communications device, **characterised in that** it has a mechanism comprising a cavity (7), a movable element (9) able to freely move within the cavity, and immobilisation means (2, 5, 6) allowing the movable element to be blocked and released, and means (13) for controlling the mechanism, and **in that** the control means (13) are arranged such that the immobilisation means (5, 6) release the movable element (9) in the cavity (7) when new information relating to the mobile communications device is available, the sound and/or sensory effect produced by said movable element (9) striking the walls of the cavity (7) alerting the user of the presence of this new information when he shakes the mobile communications device.

2. Mobile communications device as claimed in Claim 1, **characterised in that** the new information relating to the mobile communications device comprises a new received message and/or an indication of low battery charge and/or an indication of a missed call and/or a reminder of an event programmed by the user.

3. Mobile communications device as claimed in Claim 1 or 2, **characterised in that** the control means (13) are arranged such that when the user is made aware of the new available information relating to the mobile communications device, the immobilisation means (5, 6) block the movable element (9) in the cavity (7) preventing it from striking the walls of the cavity (7) when the user shakes the communications device.

4. Mobile communications device as claimed in any one of Claims 1 to 3, **characterised in that** the immobilisation means (2, 5, 6) comprise a motor (2) and mechanical blocking means (5, 6) which can be actuated by the motor (2) to release or block the movable element (9).

5. Mobile communications device as claimed in Claim 4, **characterised in that** the mechanical blocking means comprise jaws (5, 6).

6. Mobile communications device as claimed in Claim 5, **characterised in that** said jaws comprise a fixed jaw (6) and a movable jaw (5) which can be actuated by the motor (2).

7. Mobile communications device as claimed in any one of Claims 1 to 3, **characterised in that** the movable element (23) is formed of magnetisable material, and **in that** the immobilisation means comprise a motor (24), a permanent magnet (22) and means (27) which can be actuated by the motor (24) to provide or remove isolation between the movable element (23) and the magnetic attraction produced by the permanent magnet (22).

8. Mobile communications device as claimed in any one of Claims 1 to 7, **characterised in that** the movable element (9) is formed of metal.

9. Mobile communications device as claimed in any one of Claims 1 to 8, **characterised in that** the movable element (9) is a ball.

10. Mobile communications device as claimed in any one of Claims 1 to 9, **characterised in that** at least a portion of the walls of the cavity (7) is formed of metal.

11. Mobile communications device as claimed in any one of Claims 1 to 10, **characterised in that** the cavity (7) communicates with at least one other cavity (11) used as a resonating chamber.

12. Mobile communications device as claimed in any one of Claims I to 11, **characterised in that** it consists of a mobile telephone.

## Patentansprüche

1. Tragbare Kommunikationsvorrichtung, **dadurch gekennzeichnet, dass** sie einen Mechanismus, der einen Hohlraum (7), ein bewegliches Element (9), das dazu geeignet ist, sich innerhalb des Hohlraums frei zu verschieben, und Blockierungsmittel (2, 5, 6), die es ermöglichen, das bewegliche Element zu arretieren und freizugeben, und Mittel (13) zum Betätigen des Mechanismus umfasst; und **dadurch**, dass die Betätigungsmittel (13) derart eingerichtet sind, dass die Blockierungsmittel (5, 6) das bewegliche Element (9) im Hohlraum (7) freigeben, wenn neue Informationen, die die tragbare Kommunikationsvorrichtung betreffen, verfügbar sind, wobei der Klang- und/oder sensorische Effekt, der durch das bewegliche Element (9) erzeugt wird, das an die Wände des Hohlraums (7) schlägt, den Benutzer über das Vorhandensein dieser neuen Informationen benachrichtigt, wenn dieser die tragbare Kommunikationsvorrichtung schüttelt.

2. Tragbare Kommunikationsvorrichtung nach Anspruch 1, **dadurch gekennzeichnet, dass** die neuen Informationen, die die tragbare Kommunikationsvorrichtung betreffen, eine neue empfangene Nachricht und/oder eine Anzeige einer geringen Ladung der Batterie und/oder eine Anzeige eines verpassten Anrufs und/oder die durch den Benutzer programmierte Erinnerung an ein Ereignis umfassen.

3. Tragbare Kommunikationsvorrichtung nach Anspruch 1 oder 2, **dadurch gekennzeichnet, dass** die Betätigungsmittel (13) derart eingerichtet sind, dass, wenn der Benutzer die neuen verfügbaren Informationen, die die tragbare Kommunikationsvorrichtung betreffen, zur Kenntnis genommen hat, die Blockierungsmittel (5, 6) das bewegliche Element (9) im Hohlraum (7) arretieren, wodurch es daran gehindert wird, gegen die Wände des Hohlraums (7) zu schlagen, wenn der Benutzer die Kommunikationsvorrichtung schüttelt.

4. Tragbare Kommunikationsvorrichtung nach einem der Ansprüche 1 bis 3, **dadurch gekennzeichnet, dass** die Blockierungsmittel (2, 5, 6) einen Motor (2) und mechanische Arretierungsmittel (5, 6) umfassen, die durch den Motor (2) angetrieben werden können, um das bewegliche Element (9) freizugeben oder zu arretieren.

5. Tragbare Kommunikationsvorrichtung nach Anspruch 4, **dadurch gekennzeichnet, dass** die mechanischen Arretierungsmittel Klemmbacken (5, 6) umfassen.

6. Tragbare Kommunikationsvorrichtung nach Anspruch 5, **dadurch gekennzeichnet, dass** die Klemmbacken eine feste Klemmbacke (6) und eine bewegliche Klemmbacke (5) umfassen, die durch den Motor (2) angetrieben werden kann.

7. Tragbare Kommunikationsvorrichtung nach einem der Ansprüche 1 bis 3, **dadurch gekennzeichnet, dass** das bewegliche Element (23) aus einem magnetisierbaren Material besteht, und **dadurch**, dass die Blockierungsmittel einen Motor (24), einen Dauermagneten (22) und Mittel (27) umfassen, die durch den Motor (24) angetrieben werden können, um das bewegliche Element (23) von der magnetischen Anziehung, die durch den Dauermagneten (22) erzeugt wird, zu isolieren oder nicht.

8. Tragbare Kommunikationsvorrichtung nach einem der Ansprüche 1 bis 7, **dadurch gekennzeichnet, dass** das bewegliche Element (9) aus Metall besteht.

9. Tragbare Kommunikationsvorrichtung nach einem der Ansprüche 1 bis 8, **dadurch gekennzeichnet, dass** das bewegliche Element (9) eine Kugel ist.

10. Tragbare Kommunikationsvorrichtung nach einem der Ansprüche 1 bis 9, **dadurch gekennzeichnet, dass** zumindest ein Abschnitt der Wände des Hohlraums (7) aus Metall besteht.

11. Tragbare Kommunikationsvorrichtung nach einem der Ansprüche 1 bis 10, **dadurch gekennzeichnet, dass** der Hohlraum (7) mit mindestens einem anderen Hohlraum (11) in Verbindung steht, der als Resonanzkasten dient.

12. Tragbare Kommunikationsvorrichtung nach einem der Ansprüche 1 bis 11, **dadurch gekennzeichnet, dass** sie aus einem tragbaren Telefon besteht.
